# EUROPEAN PATENT APPLICATION

(11) **EP 3 868 657 A1**
(43) Date of publication of application: **25.08.2021**
(21) Application number: 21161207.2
(22) Date of filing: 28.10.2016
(51) Int. Cl.: B64C 27/14, A63H 27/00, B64C 39/02

(54) **ENGINE/PROPELLER CONNECTION ASSEMBLY**

(62) Divisional of application: 16919717.5
(71) Applicant: SZ DJI Technology Co., Ltd., Shenzhen, Guangdong 518057 (CN)
(72) Inventor: JIANG, Bin, Shenzhen, Guangdong 518057 (CN); DENG, Tao, Shenzhen, Guangdong 518057 (CN); OU, Di, Shenzhen, Guangdong 518057 (CN)
(74) Representative: Goddar, Heinz J.

(57) **Abstract**

A propulsion system assembly, including a propeller and a motor configured to drive the propeller to rotate, is provided. The propeller assembly includes one of a first body (1) and a second body (2). The motor includes the other one of the first body and the second body. The propulsion system assembly (100) also includes a locking mechanism configured to lock the first body and the second body. The locking mechanism includes a coupling member (3), a fastener (4) configured to fix the coupling member to the second body, and a locking member (5) configured to lock the first body to the coupling member and the second body. In the disclosure structures, a bottom portion of the first body that contacts the coupling member is configured to block a free end (41) of the fastener. By providing the locking member, the structures of the present invention realize the locking of the first body and the second body. In the meantime, the structures of the present invention prevent the fastener from exiting from the propulsion system assembly, which may cause the first body to be separated from the second body, which in turn may cause accidents such as blade ejection.

## Description

### TECHNICAL FIELD

The present disclosure relates to the technology field of aircrafts and, more particularly, to a locking mechanism, a propeller, a motor, a propulsion system assembly, and an aircraft.

### BACKGROUND

A propeller generally includes a blade, a propeller hub for mounting the blade, and a motor coupled with the propeller hub. The motor drives the blade to rotate. Currently, the fixed coupling configuration between the propeller hub and a housing of the motor generally adopts a permanent fixing configuration, a threads tight fitting configuration, or a mechanical position limiting configuration.

When a permanent fixing configuration is used, and when the propeller needs to be transported, the propeller hub cannot be disassembled from the motor. As a result, the blade cannot be folded, causing inconvenience for transportation. Unfolded blade is also susceptible to damages. When a threads tight fitting configuration is used, and when the motor abruptly reduces its rotation speed, the blade may cause the propeller hub to disengage from a coupling interface with the motor due to the inertial of the blade, thereby causing the blade to be ejected.

When a mechanical position limiting configuration is used, during acceleration and deceleration movement processes, wear may be caused to the mechanical position limiting structure, thereby causing the blade to be ejected. In addition, the mechanical position limiting configuration generally needs to provide a threaded hole on the propeller hub and the motor, to couple with a screw for mounting the propeller hub on the motor. However, in high speed rotation, the screw may become loose, and therefore, may cause the blade and the propeller hub to fall off altogether.

### INVENTION SUMMARY

The present invention provides a locking mechanism, a propeller, a motor, a propulsion system assembly, and an aircraft.

According to a first aspect of the present invention, a locking mechanism is provided for detachably locking the propeller to the motor. The propeller includes one of a first body and a second body. The motor includes the other one of the first body and the second body. The locking mechanism includes a coupling member, a fastener for fixing the coupling member to the second body, a locking member provided on the second body for locking the first body with the coupling member. In the disclosed structures, a bottom portion of the first body that contacts the coupling member is configured to block a free end of the fastener.

According to a second aspect of the present invention, a propeller is provided. The propeller includes a propeller hub and a blade coupled with the propeller hub. The propeller also includes a locking mechanism for detachably locking the propeller hub with the motor.

The locking mechanism includes a coupling member, a fastener for fixing the coupling member on the motor, and a locking member for locking the propeller hub with the coupling member and the motor. In the disclosed structures, a bottom portion of the propeller hub that contacts the coupling member is configured to block a free end of the fastener.

According to a third aspect of the present invention, a propeller is provided. The propeller includes a propeller hub and a blade coupled with the propeller hub. The propeller also includes a locking member for locking the propeller hub with the motor.

The locking mechanism includes a coupling member, a fastener for fixing the coupling member on the propeller hub, and a locking member for locking the motor with the coupling member and the propeller hub. In the disclosed structures, a bottom portion of the motor that contacts the coupling member is configured to block a free end of the fastener.

According to a fourth aspect of the present invention, a motor is provided. The motor includes an outer rotor. The motor also includes a locking mechanism for detachably locking a propeller with the rotor.

The locking mechanism includes a coupling member, a fastener for fixing the coupling member to the propeller, and a locking member for locking the outer rotor with the coupling member and the propeller. In the disclosed structures, a bottom portion of the outer rotor that contacts the coupling member is configured to block a free end of the fastener.

According to a fifth aspect of the present invention, a motor is provided. The motor includes an outer rotor. The motor also includes a locking mechanism for detachably locking a propeller with the outer rotor.

The locking mechanism includes a coupling member, a fastener for fixing the coupling member to the outer rotor, and a locking member for locking the propeller with the coupling member and the outer rotor. In the disclosed structures, a bottom portion of the propeller that contacts coupling member is configured to block a free end of the fastener.

According to a sixth aspect of the present invention, a propulsion system assembly is provided. The propulsion system assembly includes a propeller and a motor for driving the propeller to rotate. The propeller includes one of a first body and a second body, and the motor includes the other one of the first body and the second body. The propulsion system assembly also includes a locking mechanism for locking the first body and the second body. The locking mechanism includes a coupling member, and a fastener for fixing the coupling member to the second body, and a locking member for locking the first body with the coupling member and the second body. In the disclosed structures, a bottom portion of the first body that contacts the coupling member is configured to block a free end of the fastener.

According to a seventh aspect of the present invention, an aircraft is provided. The aircraft includes an aircraft body and a propulsion system assembly. The propulsion system assembly includes a propeller, a motor for driving the propeller to rotate, and a locking mechanism for detachably locking the propeller with the motor.

The propeller includes one of a first body and a second body, and the motor includes the other one of the first body and the second body.

The locking mechanism is configured to lock the first body and the second body. The locking mechanism includes a coupling member, a fastener for fixing the coupling member to the second body, and a locking member for locking the first body to the coupling member and the second body. In the disclosed structures, a bottom portion of the first body that contacts the coupling member is configured to block a free end of the fastener.

According to an eighth aspect of the present invention, a locking mechanism is provided for detachably locking the propeller with the motor. The propeller includes one of a first body and a second body, and the motor includes the other one of the first body and the second body.

The locking mechanism includes a locking member and a position limiting lock catch, among which the locking member is configured to lock the first body and the second body. The locking member includes locking parts located on at least two sides. When the locking parts of the locking member rotate to locking positions, the position limiting lock catch is mounted to a side of the locking parts, thereby restraining the locking member from rotating relative to the first body.

According to a ninth aspect of the present invention, a propeller is provided. The propeller includes a propeller hub and a blade coupled with the propeller hub. The propeller also includes a locking mechanism for detachably locking the propeller hub with the motor.

The locking mechanism includes a locking member and a position limiting lock catch. The locking member is configured to lock the propeller hub with the motor. The locking member is provided with locking parts on at least two sides. When the locking parts of the locking member rotate to locking positions, the position limiting lock catch is mounted to a side of the locking parts, thereby restraining the locking member from rotating relative to the propeller hub.

According to a tenth aspect of the present invention, a propeller is provided. The propeller includes a propeller hub and a blade coupled with the propeller hub. The propeller also includes a locking mechanism for detachably locking the propeller hub with the motor.

The locking mechanism includes a locking member and a position limiting lock catch. The locking member is configured to lock the propeller hub with the motor. The locking member is provided with locking parts on at least two sides. When the locking parts of the locking member rotate to locking positions, the position limiting lock catch is mounted to a side of the locking parts, thereby restraining the locking member from rotating relative to the motor.

According to an eleventh aspect of the present invention, a motor is provided. The motor includes an outer rotor. The motor also includes a locking mechanism for detachably locking the propeller with the outer rotor.

The locking mechanism includes a locking member and a position limiting lock catch. The locking member is configured to lock the outer rotor with the propeller. The locking member is provided with locking parts on at least two sides. When the locking parts of the locking member rotate to locking positions, the position limiting lock catch is mounted to a side of the locking parts, thereby restraining the locking member from rotating relative to the outer rotor.

According to a twelfth aspect of the present invention, a motor is provided. The motor includes an outer rotor. The motor also includes a locking mechanism for detachably locking the propeller with the outer rotor.

The locking mechanism includes a locking member and a position limiting lock catch. The locking member is configured to lock the outer rotor with the propeller. The locking member is provided with locking parts on at least two sides. When the locking parts of the locking member rotate to locking positions, the position limiting lock catch is mounted to a side of the locking parts, thereby restraining the locking member from rotating relative to the propeller.

According to a thirteenth aspect of the present invention, a propulsion system assembly is provided. The propulsion system assembly includes a propeller and a motor for driving the propeller to rotate. The propeller includes one of a first body and a second body, the motor includes the other one of the first body and the second body. The propulsion system assembly also includes a locking mechanism for detachably locking the first body and the second body.

The locking mechanism includes a locking member and a position limiting lock catch. The locking member is configured to lock the first body with the second body. The locking member is provided with locking parts on at least two sides. When the locking parts of the locking member rotate to locking positions, the position limiting lock catch is mounted to a side of the locking parts, thereby restraining the locking member from rotating relative to the first body.

According to a fourteenth aspect of the present invention, an aircraft is provided. The aircraft includes an aircraft body and a propulsion system assembly. The propulsion system assembly includes a propeller, a motor for driving the propeller to rotate, and a locking mechanism for detachably locking the propeller with the motor.

The propeller includes one of a first body and a second body, the motor includes the other one of the first body and the second body.

The locking mechanism is configured to detachably connect the first body and the second body. The locking mechanism includes a locking member and a position limiting lock catch. The locking member is configured to lock the first body with the second body. The locking member is provided with locking parts on at least two sides. When the locking parts of the locking member rotate to locking positions, the position limiting lock catch is mounted to a side of the locking parts, thereby restraining the locking member from rotating relative to the first body.

As can be seen from the technical solutions provided by embodiments of the present invention, the present invention provides a locking member, which can restrain the first body and the coupling member from falling apart from the second body due to the fastener becoming loose. As a result, the risk of blade ejection is reduced for the blade connected to the first body or the second body. In addition, the present invention provides a position limiting structure of the first body that is configured to block a free end or a position limiting lock catch, which can facilitate locking of the first body with the second body, thereby avoiding blade ejection caused by the first body falling apart from the second body.

### BRIEF DESCRIPTION OF THE DRAWINGS

To better describe the technical solutions of the various embodiments of the present disclosure, the accompanying drawings showing the various embodiments will be briefly described. As a person of ordinary skill in the art would appreciate, the drawings show only some embodiments of the present disclosure. Without departing from the scope of the present disclosure, those having ordinary skills in the art could derive other embodiments and drawings based on the disclosed drawings without inventive efforts.
FIG. 1 is a schematic diagram of an assembled portion of a propulsion system assembly, illustrating the assembling position relationship among various parts, according to an example embodiment.
FIG. 2 is a schematic diagram of an assembled portion of the propulsion system assembly viewed from another perspective, illustrating the assembling position relationship among various parts, according to an example embodiment.
FIG. 3 is a three-dimensional view of an assembled portion of the propulsion system assembly, according to an example embodiment.
FIG. 4 is a three-dimensional view of an assembled portion of the propulsion system assembly viewed from another perspective, according to an example embodiment.
FIG. 5 is a three-dimensional view of a locking member, according to an example embodiment.
FIG. 6 is a three-dimensional view of a position limiting lock catch, according to an example embodiment.
FIG. 7 is a three-dimensional view of a position limiting lock catch, according to another example embodiment.
FIG. 8 is a schematic diagram of a blade in a locked state, according to an example embodiment.
FIG. 9 is a perspective view of an overall assembled propulsion system assembly, according to an example embodiment.
FIG. 10 is a perspective view of an overall assembled propulsion system assembly, illustrating the assembling position relationship among various parts, according to an example embodiment.
FIG. 11 is a perspective view of an overall assembled propulsion system assembly, according to another example embodiment.
FIG. 12 is a perspective view of an overall assembled propulsion system assembly, illustrating the assembling position relationship among various parts, according to another example embodiment.
FIG. 13 is a three-dimensional view of an aircraft, according to an example embodiment.

### Label List of the Drawings:

100: propulsion system assembly; 200: aircraft body;
1: first body; 11: blocking member; 12: protruding rib; 13: first raised portion; 2: second body; 21: second raised portion; 3: coupling member; 31: second threaded hole; 32: femoral position groove; 33: receiving space; 4: fastener; 41: free end; 5: locking member; 50: locking part; 51: first lock catch end; 52: second lock catch end; 53: first groove; 54: second groove; 55: third lock catch end; 56: protrusion; 57: position limiting block; 58: blocking boss; 6: position limiting lock catch; 61: position limiting groove; 62: connecting arm; 63: operating member; 64: opening part; 65: connecting block; 66: position limiting boss; 67: reinforcing rib; 7: blade; A: driving shaft; B: driving groove.

### DETAILED DESCRIPTION OF THE EMBODIMENTS

Technical solutions of the present disclosure will be described in detail with reference to the drawings. It will be appreciated that the described embodiments represent some, rather than all, of the embodiments of the present disclosure. Other embodiments conceived or derived by those having ordinary skills in the art based on the described embodiments without inventive efforts should fall within the scope of the present disclosure. In addition, when there is no obvious conflict, the following embodiments and the features included in the embodiments can be combined.

### First Embodiment

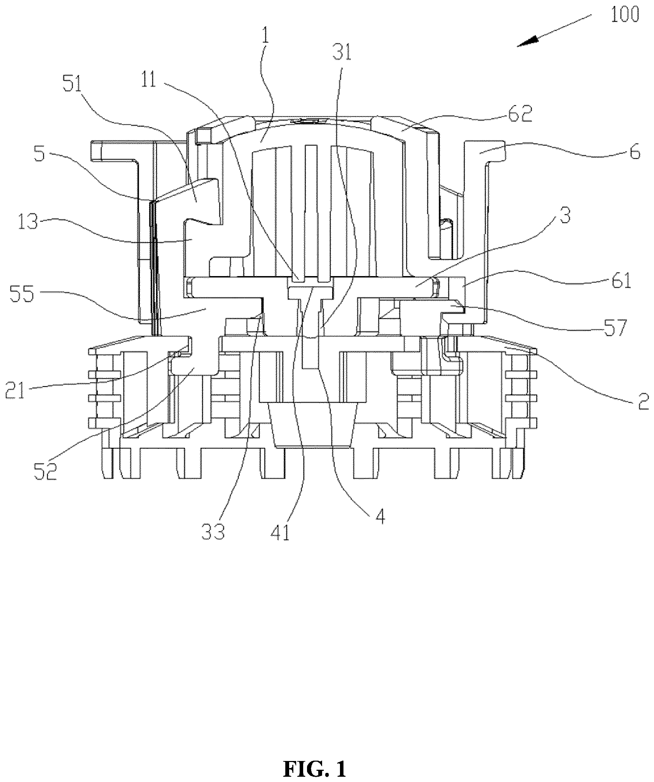

As shown in FIG. 1, the first embodiment of the present disclosure provides a locking mechanism for detachably locking a propeller with a motor, and for locking a first body 1 with a second body 2. In some embodiments, the first body 1 may be a propeller hub of the propeller, an outer rotor of the motor, or an adapter provided on the outer rotor of the motor. The second body 2 may be the propeller hub of the propeller, the outer rotor of the motor, or the adapter.

The locking mechanism may include a coupling member 3, a fastener 4 for fixing the coupling member 3 with the second body 2, and a locking member 5 for locking the first body 1 with the coupling member 3 and the second body 2. A bottom portion of the first body 1 that contacts the coupling member 3 can block a free end 41 of the fastener 4. The coupling member 3 is disposed between the first body 1 and the second body 2, and functions as an intermediate connecting member to couple the first body 1 with the second body 2.

In the disclosed structures, the first body 1 may include a blocking member 11 disposed at a bottom portion of the first body 1 that contacts the coupling member 3 and extending from the bottom portion. The coupling member 3 may include a femoral position groove 32. A bottom portion of the first body 1 that contacts the coupling member 3 may be provided with a protruding rib 12 configured to fit with the femoral position groove 32, to block the first body 1 from rotating relative to the coupling member 3. The protruding rib 12 fits with the femoral position groove 32, thereby increasing the fitting surfaces and reducing the empty space between the first body 1 and the coupling member 3. This design may also reduce the wear caused by the first body 1 rotating relative to the coupling member 3, thereby prolonging the operation life of the first body 1. In addition, the fitting between the protruding rib 12 and the femoral position groove 32 can increase the stability of connection between the first body 1 and the coupling member 3 and the precision of the fitting between the first body 1 and the coupling member 3. As a result, torque transfer between the first body 1 and the coupling member 3 becomes more stable, and the transfer effect is enhanced.

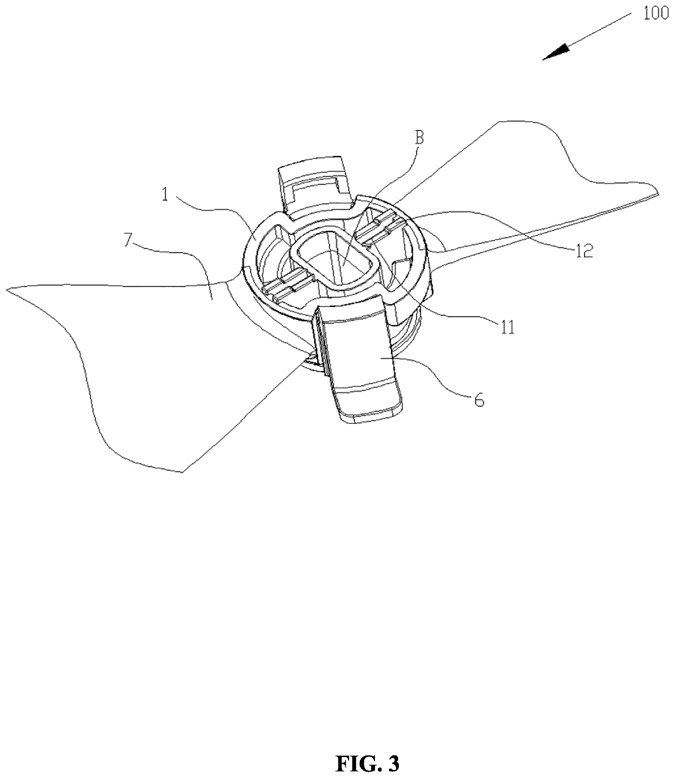

In some embodiments, as shown in FIG. 3, the protruding rib 12 and the blocking member 11 may be integrally provided, making the structure simpler.

Referring back to FIG. 1, a first threaded hole may be provided in the second body 2 to fit with the fastener 4 (not labeled in the figure). The coupling member 3 may be provided with a second threaded hole 31 configured to fit with the fastener 4. The first threaded hole and the second threaded hole 31 may face each other vertically. When the fastener 4 is inserted into the first threaded hole and the second threaded hole 31, the coupling member 3 may be fixed to the second body 2.

The fastener 4 may include a free end 41 located at an opening of the second threaded hole 31. The fastener 4 may be a threaded fastener (e.g., a screw, a bolt, etc.), a snap fit, or a positioning rod, which are quick-release members. In some embodiments, the fastener 4 may be a screw. The free end 41 may be a head of the screw.

To securely connect the coupling member 3 and the second body 2, multiple locations of the coupling member 3 and the second body 2 may be fastened together. In some embodiments, two fasteners 4 may be provided to fasten together the coupling member 3 and the second body 2 at different locations.

The blocking member 11 may be disposed at an opening location of the second threaded hole 31 to block the free end 41 of the fastener 4, thereby restraining the fastener 4 from falling out from the opening of the second threaded hole 31. By providing the blocking member 11, the opening of the second threaded hole 31 is limited, thereby restraining the threaded fastener 4 from existing from the second threaded hole 31. As a result, the coupling member 3 is restrained from falling apart from the second body 2, thereby reducing the risk of blade ejection.

Optionally, a distance between a bottom portion of the blocking member 11 and the free end 41 of the fastener is smaller than a depth that the threaded fastener may insert into the first threaded hole. For example, the depth the threaded fastener may be inserted into the first threaded hole may be 2 cm, and the distance between the bottom portion of the blocking member 11 and the free end of the threaded fastener may be set as 50 mm. Then, if the threaded fastener becomes loose, because of the blocking function provided by the blocking member 11, the free end 41 of the threaded fastener is limited to be under the blocking member 11. Thus, the threaded fastener cannot entirely exit from the threaded hole 31, thereby restraining the coupling member 3 from separating from the second body 2.

Optionally, the bottom portion of the blocking member 11 can directly abut against the free end 41 of the threaded fastener to limit the moving space of the threaded fastener. Thus, the threaded fastener cannot exit from the threaded hole 31. As a result, the coupling member 3 can be more securely fixed to the second body 2.

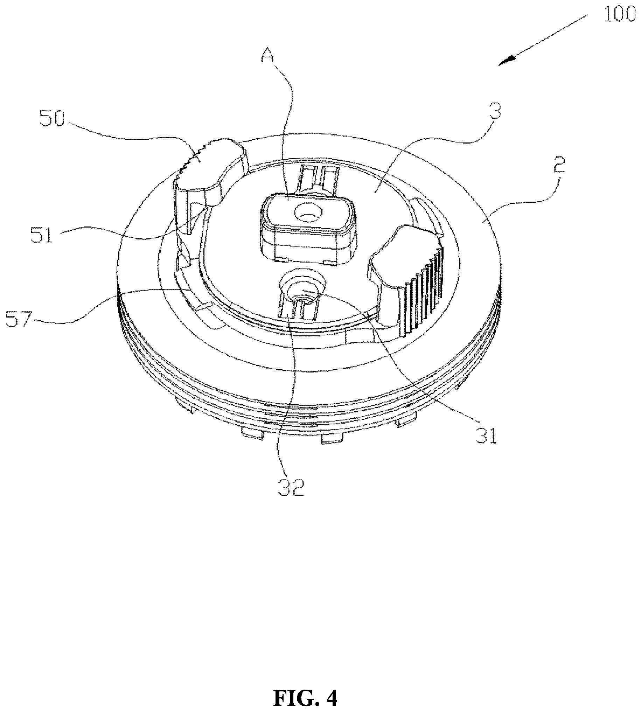

As shown in FIG. 3 and FIG. 4, the blocking member 11 may include two raised portions disposed apart by a predetermined distance, to block the free end 41 of the threaded fastener at different locations, thereby restraining the threaded fastener from exiting the threaded hole 31 from different locations. Correspondingly, there are two protruding ribs 12, protruding from the raised portions and are integrally formed with the raised portions in one-to-one correspondence.

The femoral position groove 32 may be disposed aside the second threaded hole 31. To fit with the two protruding ribs 12, the second threaded hole 31 may include two corresponding femoral position grooves 32.

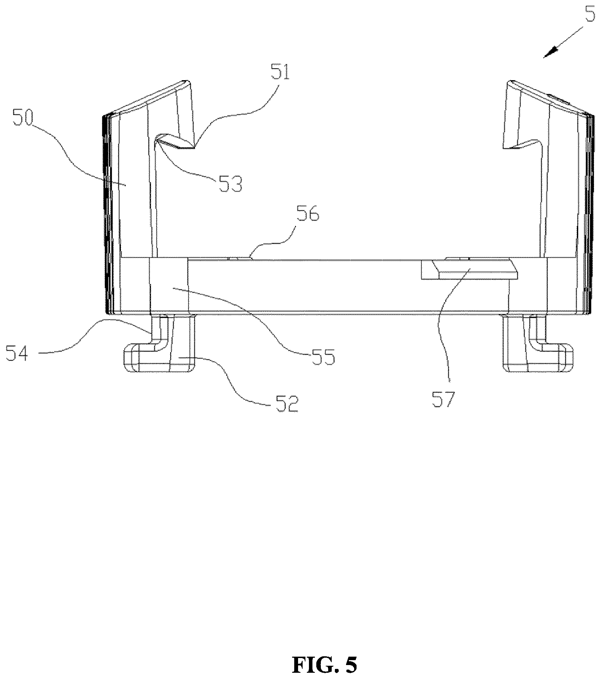

As shown in FIG. 5, the locking member 5 may include locking parts 50 located at at least two sides of the locking member 5, through which the locking member 5 can lock the first body 1 and the coupling member 3 with the second body 2 from at least two locations and/or directions. As a result, the locking between the first body 1, the coupling member 3 and the second body 2 becomes more reliable.

The locking part 50 may include a first lock catch end 51 configured to lock the first body 1, a second lock catch end 52 configured to lock the second body 2, and a third lock catch end 55 configured to lock the first body 1 and the coupling member 3.

In some embodiments, the first lock catch end 51 and the second lock catch end 52 are located at an upper end and a lower end of the locking part 50, respectively. The third lock catch end 55 may be disposed between the first lock catch end 51 and the second lock catch end 52.

The first lock catch end 51 can lock the first body 1 from the upper portion of the locking part 50. As shown in FIG. 1 and FIG. 5, the first lock catch end 51 may be provided with a first groove 53. The first body 1 may be provided with a first raised portion to fixedly fit with the first groove 53. When the first raised portion 13 is inserted into the first groove 53, the first raised portion 13 is fixedly connected with the first groove 53, thereby fulfilling the purpose of fixedly locking the first body 1 with the locking member 5. Furthermore, with the fixed fitting configuration, the first raised portion 13 cannot rotate relative to the first groove 53, thereby restraining the locking member 5 from rotating relative to the first body 1 and reducing the wear to the locking member 5 due to rotation. As a result, the operation life of the locking member 5 can be prolonged.

The second lock catch end 52 may be configured to fixedly lock the second body 2 at the lower portion of the locking part 50. As shown in FIG. 1 and FIG. 5, the second lock catch end 52 may be provided with a second groove 54. The second body 2 may be provided with a second raised portion 21 configured to slidably fit with the second groove 54. By position limiting using the second groove 54 and the second raised portion 21, the second body 2 may be fixedly locked with the locking member 5. As a result, even if the fastener 4 becomes loose and exits completely, by position limiting through the second groove 54, the second groove 54 may tightly pull the second raised portion 21, thereby restraining the locking member 5 from being separated from the second body 2, which in turn restrains the first body 1 and the coupling member 3 from falling apart from the second body 2. In addition, the sliding fit (i.e., the clearance fit) configuration between the second groove 54 and the second raised portion 21 may enable the locking member 5 to rotate relative to the second body 2 after the locking member 5 locks the second body 2. As a result, the locking member 5 may synchronously rotate with the blade 7, thereby restraining the blade 7 from colliding with the locking member 5 during rotation.

Optionally, openings of the first groove 53 and the second groove 54 may have opposite directions. The first groove 53 may apply a downward pressing force on the first body 1, and the second groove 54 may apply an upward pulling force on the second body 2, thereby enabling the locking part 50 to lock the first body 1 and the second body 2 more tightly. As a result, blade ejection due to the first body 2 being separated from the second body 1 can be avoided.

As seen in FIG. 1 and FIG. 5, the third lock catch end 55 may be provided with a protrusion 56 configured to abut with the coupling member 3 to further lock the first body 1 and the coupling member 3, thereby restraining, from multiple locations and/or directions, the first body 1 from being separated from the coupling member 3. As shown in FIG. 1, to lock the first body 1 and the coupling member 3, the coupling member 3 may be provided with a receiving space 33 for receiving the protrusion 56.

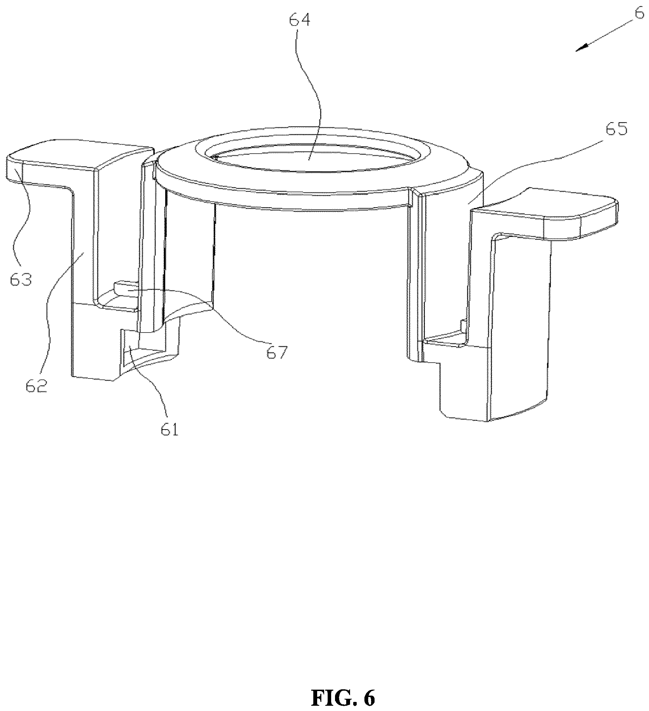

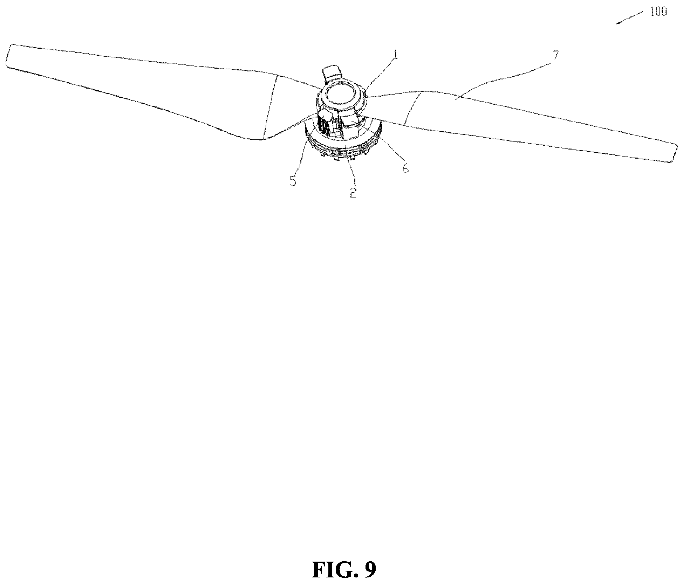

As shown in FGI. 1, FIG. 6, FIG. 9, and FIG. 10, the locking mechanism may also include a position limiting groove 61, a connecting arm 62, and an operating member 63. In the disclosed structures, the position limiting groove 61 may be located at a lower end of the connecting arm 62, and the operating member 63 may be located at an upper end of the connecting arm 62.

When the locking part 50 of the locking member 5 rotates to a locking position, the position limiting lock catch 6 may be mounted to a side of the locking part 50, to restrain the locking member 5 from rotating relative to the first body 1, thereby assisting a user in determining whether the locking member 5 has been placed in a locking position, and whether the blade 7 has been installed completely or properly. The disclosed structures can also restrain the locking member 5 from rotating relative to the first body 1 caused by the locking member 5 not being tightly locked, thereby avoiding wear to the locking member 5 that would render the locking member 5 ineffective, which may result in blade ejection.

Optionally, the locking member 5 may be provided with a position limiting block 57 configured to snap fit with the position limiting groove 61. With the snap fit configuration, the position limiting lock catch 6 may have advantages such as convenient installation, simple disassembling, and easy replacement.

To assist a user in determining whether the locking member 5 has rotated to a locking position, and determining whether the blade has been properly installed, the location of the position limiting blocks 57 does not coincide with the locations of the locking parts 50.

Optionally, the position limiting block 57 may be disposed between the two locking parts 50. For example, the position limiting block 7 may be disposed on a side of the locking parts 50 distant from the blade 7. In some embodiments, the locking state of the blade 7 may be determined based on the position or location relationship between the position limiting lock catch 6, the position limiting block 57, and the locking parts 50.

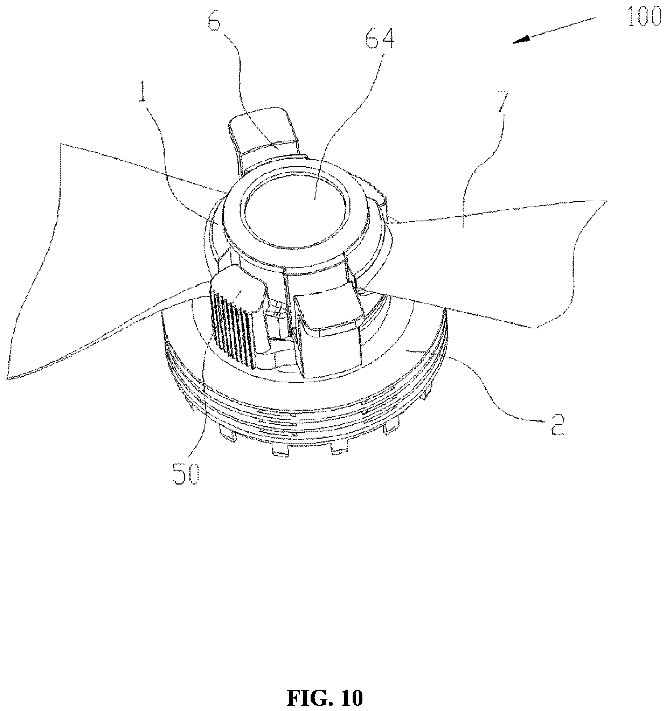

As shown in FIG. 4 and FIG. 10, the position limiting block 57 and the locking part 50 may be disposed in pairs. Correspondingly, the position limiting groove 61 and the position limiting block 57 may be disposed in pairs. Accordingly, the locking state of the locking member 5 can be determined from multiple aspects.

As shown in FIG. 6, the position limiting groove 61, the connecting arm 62, and the operating member 63 are disposed correspondingly. In addition, corresponding to the locking parts 50, the position limiting lock catch 6 may include at least two groups of position limiting grooves 61, connecting arms 62, and operating members 63.

In some embodiments, a user may press the operating member 63 to eject the position limiting lock catch 6 from the position limiting block 57, thereby making it convenient to disassemble blade 7 for easy transportation. The position limiting lock catch 6 may be made of an elastic material, such as plastics, which can shrink, making it easier to eject the position limiting lock catch 6 from the position limiting block 57.

In some embodiments, the position limiting lock catch 6 may be independently disposed, making it convenient to disassemble and replace.

As shown in FIG. 6, the position limiting lock catch 6 may include an open portion 64 configured to fit with a top portion of the first body 1. For example, the open portion 64 may be sleeve coupled at the top portion of the first body 1 to further fasten the first body 1, thereby restraining the first body 1 from rotating relative to the locking member 5 and the coupling member 3.

In some embodiments, two sides of the open portion 64 are provided with downwardly extended connecting blocks 65. A bottom portion of each connecting block 65 may be connected with the connecting arm 62.

In some embodiments, a reinforcing rib 67 may be provided between the connecting arm 62 and the connecting block 65 to restrain damages to the connecting arm 62 caused by excessive forces pressing the operating member 63.

In some embodiments, when disassembling the position limiting lock catch 6, a user may simultaneously apply a force on the two operating members 63 toward the open portion 64. Due to the elasticity of the position limiting lock catch 6, the two connecting arms 62 may shrink toward the open portion 64. Furthermore, the two position limiting grooves 61 may exit from the corresponding position limiting blocks 57. Thus, the user may disassemble the position limiting lock catch 6 entirely. The disclosed structures are simple and easy to operate.

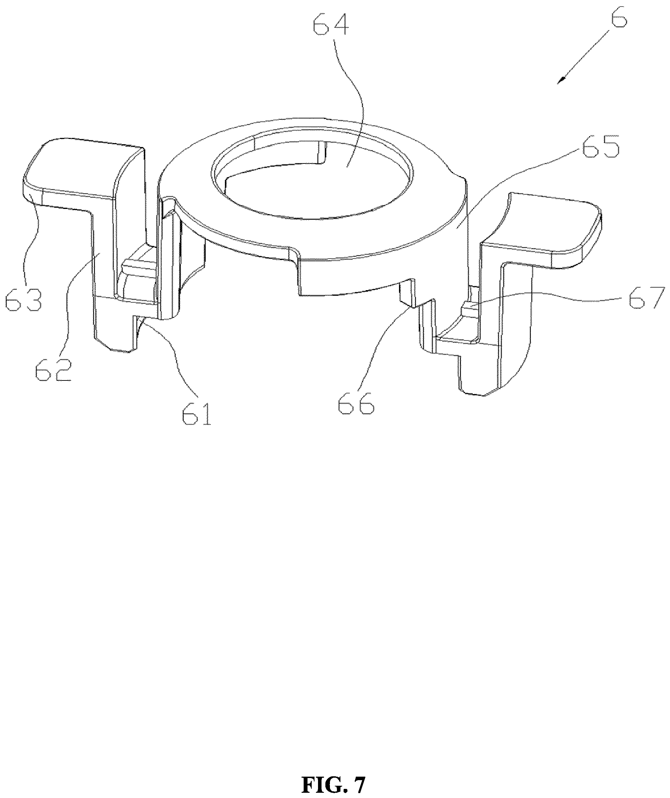

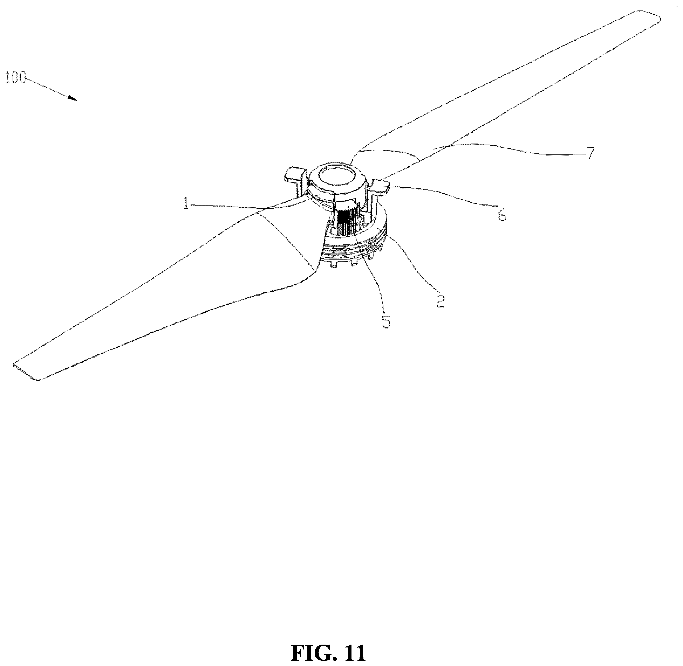

Optionally, as shown in FIG. 7, FIG. 11, and FIG. 12, the position limiting lock catch 6 may include a position limiting boss 66. The position limiting boss 66 may be configured to connect with a connecting block 65.

When the locking parts 50 of the locking member 5 rotate to the locking position, the position limiting boss 66 may block the locking parts 50 from a side of the locking parts 50, restraining the locking member 5 from rotating relative to the first body 1.

Optionally, the position limiting boss 66, the connecting block 65, and the open portion 64 may be integrally formed, rendering the structure of the position limiting lock catch 6 simple.

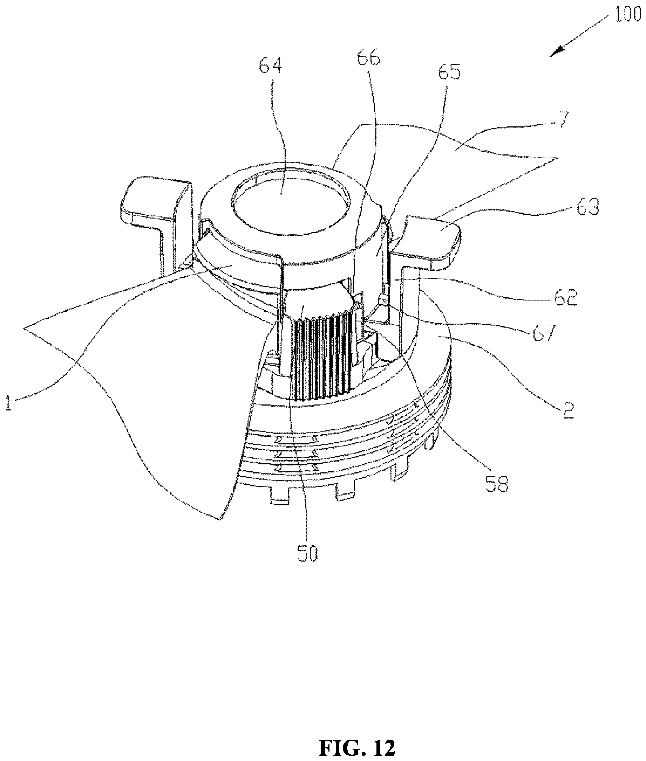

As shown in FIG. 7 and FIG. 12, the position limiting boss 66 may have a step shape, which may include a first step surface (not labeled in the figure) and a second step surface (not labeled in the figure). The first step surface and a lower surface of the open portion 64 may form a first position limiting space. The second step surface and the connecting block 65 may form a second position limiting space.

When the locking part 50 of the locking member 5 rotates to a locking position, the first lock catch end 51 of the locking part 50 may be restrained within the first position limiting space to better limit the position of the locking member 5, thereby restraining the locking member 5 from rotating relative to the first body 1. The disclosed structures reduce the wear to the locking member 5, thereby prolonging the operation life of the locking member 5.

A blocking boss 58 may be provided on a side of the locking part 50 that faces the position limiting boss 66. When the locking part 50 of the locking member 5 rotates to a locking position, the blocking boss 58 may be restrained within the second position limiting space, thereby better limiting the position of the locking member 5. The disclosed structures may avoid wear to the locking member 5 caused by the rotation of the locking member 5 relative to the first body 1, thereby prolonging the operation life of the locking member 5.

### Second Embodiment

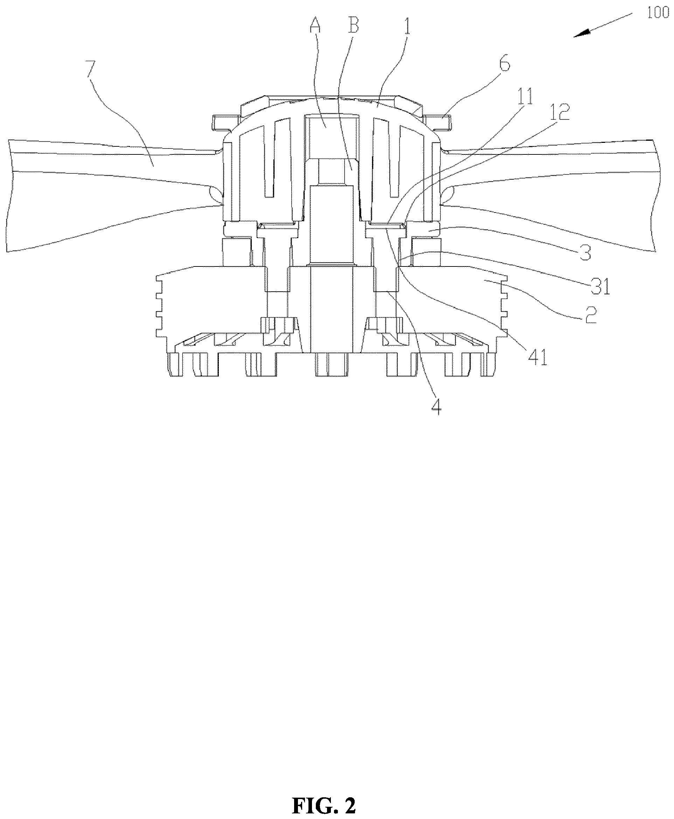

As shown in FIG. 2, the second embodiment of the present disclosure provides a propeller, including a propeller hub, the blade 7 connected with the propeller hub, and the locking mechanism disclosed in the first embodiment. In the disclosed structures, the locking mechanism may be configured to detachably lock the propeller hub with the motor.

Optionally, as shown in FIG. 2 and FIG. 3, the first body 1 may be the propeller hub, the second body 2 may be an outer rotor of the motor or an adapter provided on the outer rotor of the motor. The propeller hub may be detachably mounted to the motor through the locking mechanism of the first embodiment.

Optionally, the second body 2 may be the propeller hub. The first body 1 may be the outer rotor of the electron, or an adapter disposed on the outer rotor of the electron. The propeller hub may be detachably mounted to the motor through the locking mechanism of the first embodiment.

### Third Embodiment

As shown in FIG. 1 and FIG. 2, the third embodiment of the present disclosure provides a motor including an outer rotor, an inner rotor, and a locking mechanism of the first embodiment. In the disclosed structures, the locking mechanism may be configured to detachably lock the propeller with the outer rotor.

Optionally, the first body 1 may be the outer rotor or an adapter provided on the outer rotor. The second body 2 may be the propeller hub of the propeller. In the disclosed structures, the adapter may be disposed on the outer rotor of the motor, or disposed on a rotating shaft of an inner rotor of the motor. The propeller may be detachably mounted to the outer rotor of the motor through the locking mechanism of the first embodiment.

Optionally, as shown in FIG. 1 and FIG. 2, the second body 2 may be the outer rotor or the adapter provided on the outer rotor. The first body 1 may be the propeller hub of the propeller. In the disclosed structures, the adapter may be provided on the outer rotor of the motor or disposed on a rotating shaft of an inner rotor of the motor. The propeller may be detachably disposed on the outer rotor of the motor through the locking mechanism of the first embodiment.

### Fourth Embodiment

As shown in FIG. 2, the fourth embodiment of the present disclosure provides a propulsion system assembly, including the propeller and the motor configured to drive the propeller to rotate. A propulsion system assembly 100 may include the locking mechanism of the first embodiment.

Optionally, the motor may include the outer rotor. The propeller may include the propeller hub and the blade 7 connected with the propeller hub.

Optionally, as shown in FIG. 2, the first body 1 is the propeller hub of the propeller, and the second body 2 is the outer rotor of the motor, or the adapter disposed on the outer rotor of the motor. In the disclosed structures, the adapter may be disposed on the outer rotor of the motor, or may be fixedly connected to the rotating shaft of an inner rotor of the motor.

Optionally, the second body 2 is the propeller hub of the propeller, and the first body 1 is the outer rotor of the motor or the adapter disposed on the outer rotor of the motor. In the disclosed structures, the adapter may be disposed on the outer rotor or may be fixedly connected to the rotating shaft of an inner rotor of the motor.

The motor may include a driving shaft A, as shown in FIG. 3 and FIG. 4. The driving shaft A of the motor may protrude from the coupling member 3. The propeller hub may include a driving groove B configured to fit with the driving shaft A to provide propulsion forces.

### Fifth Embodiment

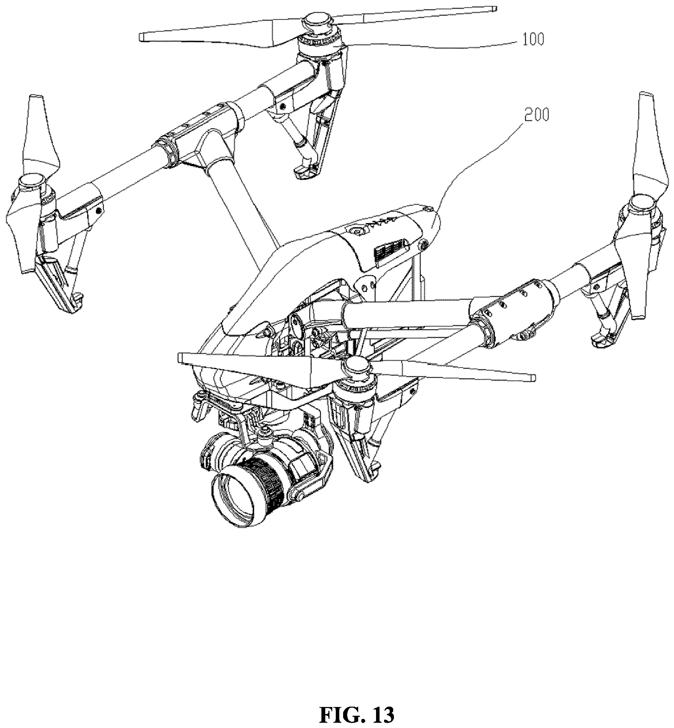

As shown in FIG. 13, the fifth embodiment of the present disclosure provides an aircraft, including an aircraft body 200, a battery installed in the aircraft body 200, and the propulsion system assembly 100 of the fourth embodiment. In some embodiments, the aircraft may be an unmanned aerial vehicle, a remote control airplane, etc.

The aircraft body 200 may be configured for mounting the propulsion system assembly 100. For example, the motor of the propulsion system assembly 100 may be mounted on the aircraft body 200.

The battery may provide electrical energy to the motor of the propulsion system assembly 100.

### Sixth Embodiment

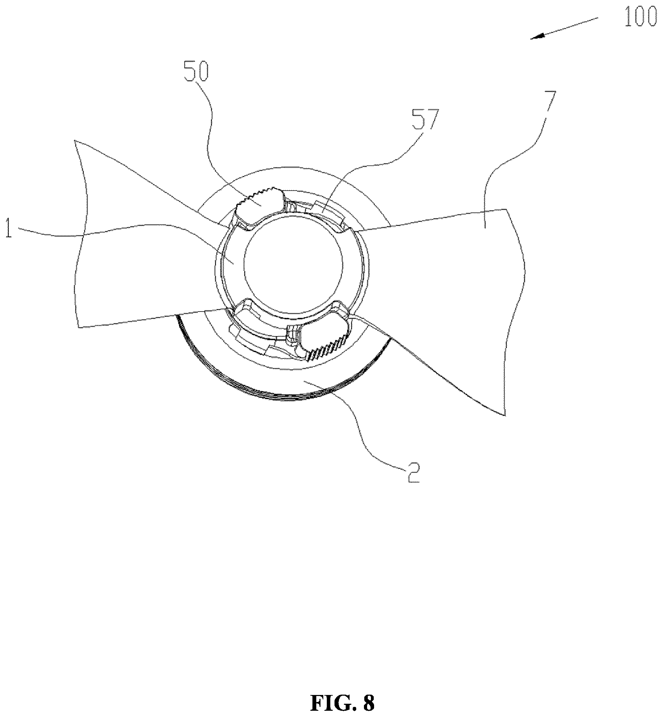

As shown in FIG. 1, the sixth embodiment of the present disclosure provides a locking mechanism configured to detachably lock the propeller with the motor. As shown in FIG. 1, FIG. 2, and FIG. 8 - FIG. 12, the locking mechanism may be configured to detachably connect the first body 1 and the second body 2. It is understood, that in the present disclosure, the first body 1 may be the propeller hub of the propeller, the outer rotor of the motor, or the adapter disposed on the outer rotor of the motor. The second body 2 may be the propeller hub of the propeller, the outer rotor of the motor, or the adapter disposed on the outer rotor of the motor.

The locking mechanism may include the locking member 5 and the position limiting lock catch 6. In some embodiments, the locking member 5 may be configured to lock the first body 1 with the second body 2. The locking member 5 may include locking parts 50 disposed at at least two sides of the locking member 5. When the locking part 50 of the locking member 5 rotates to a locking position, the position limiting lock catch 6 may be mounted to a side of the locking part 50 to restrain the locking member 5 from rotating relative to the first body 1.

The locking member 5 may restrain the first body 1 from separating from the second body 2, thereby reducing the risk of ejecting the blade 7 that is mounted on the first body 1 or the second body 2. Furthermore, by providing locking parts 50 at at least two sides of the locking member 5, the first body 1 may be locked with the second body 2 from at least two locations and directions, thereby increasing the reliability of the locking between the first body 1 and the second body 2.

Providing the position limiting lock catch 6 may assist a user in determining whether the locking member 5 has been placed in a locking position, and whether the blade 7 has been installed completely or properly. The disclosed structures may also restrain the locking member 5 from rotating relative to the first body 1 caused by the locking member 5 not being tightly locked, thereby avoiding wear to the locking member 5 that would render the locking member 5 ineffective, which may result in blade ejection.

As shown in FIG. 4 and FIG. 6 - FIG. 12, the position limiting lock catch 6 may be detachably mounted to a side of the locking part 50, and may be manually disassembled from the locking part 50. The position limiting lock catch 6 may be independently provided, making it convenient to disassemble and replace.

Optionally, the locking member 5 is provided with the position limiting block 57. The position limiting lock catch 6 is provided with the position limiting groove 61 to snap fit with the position limiting block 57. With the snap fit configuration, the position limiting lock catch 6 may have advantages such as convenient installation, simple disassembling, and easy replacement.

To assist a user in determining whether the locking member 5 has rotated to a locking position, and determining whether the blade has been properly installed, the location of the position limiting block 57 does not coincide with the locations of the locking parts 50.

As shown in FIG. 5, the locking part 50 may include a first lock catch end 51 configured to lock the first body 1, and a second lock catch end 52 configured to lock the second body 2. The first lock catch end 51 and the second lock catch end 52 may be located at an upper end and a lower end of the locking part 50, respectively.

The first lock catch end 51 may be configured to lock the first body 1 from the upper portion of the locking part 50. As shown in FIG. 5, the first lock catch end 51 may be provided with a first groove 53. The first body 1 may be provided with a first raised portion to fixedly fit with the first groove 53. When the first raised portion 13 is inserted into the first groove 53, the first raised portion 13 may be fixedly connected with the first groove 53, thereby fulfilling the purpose of fixedly locking the first body 1 to the locking member 5. Furthermore, with the fixed fitting configuration, the first raised portion 13 cannot rotate relative to the first groove 53, thereby restraining the locking member 5 from rotating relative to the first body 1, and reducing the wear to the locking member 5 due to rotation. As a result, the operation life of the locking member 5 can be prolonged.

The second lock catch end 52 may be configured to fixedly lock the second body 2 at the lower portion of the locking part 50. As shown in FIG. 5, the second lock catch end 52 may be provided with a second groove 54. The second body 2 may be provided with a second raised portion 21 configured to slidably fit with the second groove 54. By position limiting using the second groove 54 and the second raised portion 21, the second body 2 may be fixedly locked with the locking member 5. As a result, even if the fastener 4 becomes loose and exits completely, by position limiting through the second groove 54, the second groove 54 may tightly pull the second raised portion 21, thereby restraining the locking member 5 from being separated from the second body 2, which in turn restrains the first body 1 from falling apart from the second body 2. In addition, the sliding fit (i.e., the clearance fit) configuration between the second groove 54 and the second raised portion 21 may enable the locking member 5 to rotate relative to the second body 2 after the locking member 5 locks the second body 2. As a result, the locking member 5 may synchronously rotate with the blade 7, thereby restraining the blade 7 from colliding with the locking member 5 during rotation.

Optionally, openings of the first groove 53 and the second groove 54 may have opposite directions. The first groove 53 may apply a downward pressing force on the first body 1, and the second groove 54 may apply an upward pulling force on the second body 2, thereby enabling the locking part 50 to lock the first body 1 and the second body 2 more tightly. As a result, blade ejection due to the first body 2 being separated from the second body 1 may be avoided.

Other members of the sixth embodiment and the locking member 5, other members of the position limiting lock catch 6 are the same as those included in the first embodiment. Descriptions of such members can refer to the descriptions of the first embodiment with reference to FIG. 1 - FIG. 12, which are not repeated.

### Seventh Embodiment

As shown in FIG. 2, the seventh embodiment of the present disclosure provides a propeller, including a propeller hub, a blade 7 connected with the propeller hub, and the locking mechanism of the sixth embodiment. The locking mechanism may be configured to detachably lock the propeller hub to the motor.

Optionally, as shown in FIG. 2, the first body 1 may be the propeller hub, and the second body 2 may be an outer rotor of the motor or an adapter provided on the outer rotor of the motor. The adapter may be provided on the outer rotor of the motor, or on a rotating shaft of an inner rotor of the motor. The propeller hub may be detachably mounted to the motor through the locking mechanism of the sixth embodiment.

Optionally, the second body 2 is the propeller hub, and the first body 1 is the outer rotor of the motor or the adapter provided on the outer rotor of the motor. The adapter may be provided on the outer rotor of the motor, or fixedly connected to the rotating shaft of the inner rotor of the motor. The propeller hub may be detachably mounted to the motor through the locking mechanism of the sixth embodiment.

### Eight Embodiment

As shown in FIG. 1 and FIG. 2, the eighth embodiment of the present disclosure provides a motor, including an outer rotor, an inner rotor, and a locking mechanism of the sixth embodiment. The locking mechanism may be configured to detachably connect the propeller with the outer rotor.

Optionally, the first body is the outer rotor or the adapter provided on the outer rotor, and the second body 2 is the propeller hub of the propeller. In the disclosed structures, the adapter may be provided on the outer rotor of the motor or provided on the rotating shaft of the inner rotor of the motor. The propeller may be detachably provided on the outer rotor of the motor through the locking mechanism of the sixth embodiment.

Optionally, as shown in FIG. 2, the second body 2 may be the outer rotor or the adapter provided on the outer rotor, and the first body 1 may be the propeller hub of the propeller. In the disclosed structures, the adapter may be provided on the outer rotor of the motor or on the rotating shaft of the inner rotor of the motor. The propeller may be detachably mounted to the outer rotor of the motor through the locking mechanism of the sixth embodiment.

### Ninth Embodiment

As shown in FIG. 2, the eighth embodiment of the present disclosure provides a propulsion system assembly, including a propeller and a motor configured to drive the propeller to rotate.

The propulsion system assembly 100 may include the locking mechanism of the sixth embodiment.

Optionally, the motor may include an outer rotor. The propeller may include a propeller hub and a blade 7 connected with the propeller hub.

Optionally, the first body 1 is the propeller hub, and the second body 2 is the outer rotor of the motor, or the adapter provided on the outer rotor of the motor. In the disclosed structures, the adapter may be provided on the outer rotor of the motor, or fixedly connected to the rotating shaft of the inner rotor of the motor.

Optionally, the second body 2 is the propeller hub of the propeller, and the first body 1 is the outer rotor of the motor, or the adapter provided on the outer rotor of the motor. In the disclosed structures, the adapter is provided on the outer rotor of the motor, or fixedly connected to the rotating shaft of the inner rotor of the motor.

As shown in FIG. 2 - FIG. 4, the motor may include a driving shaft A. The driving shaft A of the motor may protrude from the coupling member 3. The propeller hub may be provided with a driving groove B configured to fit with the driving shaft A to provide a propulsion force.

### Tenth Embodiment

As shown in FIG. 13, the tenth embodiment of the present disclosure provides an aircraft, including an aircraft body 200, a battery installed in the aircraft body 200, and a propulsion system assembly 100 of the ninth embodiment. In some embodiments, the aircraft may be an unmanned aerial vehicle, a remote control plane, etc.

The aircraft body 200 may be configured for mounting the propulsion system assembly 100. For example, the propulsion system assembly 100 may be mounted on the aircraft body 200.

The battery may provide electrical energy to the motor of the propulsion system assembly 100.

In summary, the present disclosure provides a locking member 5, which can restrain the first body 1 and the coupling member from falling apart from the second body 2 due to the fastener 4 becoming loose. As a result, the risk of blade ejection is reduced for the blade 7 connected to the first body 1 or the second body 2. In addition, the present disclosure provides a position limiting structure of the first body 1 (e.g., a bottom portion of the first body 1 that contacts the coupling member 3) that is configured to block the free end 41 or a position limiting lock catch 6, which can achieve the locking of the first body with the second body from multiple position and/or orientation, thereby avoiding blade ejection caused by the first body falling apart from the second body.

In the present disclosure, the terms "upper," "lower," "front," "rear," "left," and "right" should be understood as the "upper," "lower," "front," "rear," "left," and "right" directions of the propulsion system assembly 100 that is formed by mounting, from top to bottom, the first body 1, the coupling member 3, and the second body 2.

It should be understood that in the present disclosure, relational terms such as first and second, etc., are only used to distinguish an entity or operation from another entity or operation, and do not necessarily imply that there is an actual relationship or order between the entities or operations. The terms "comprising," "including," or any other variations are intended to encompass non-exclusive inclusion, such that a process, a method, an apparatus, or a device having a plurality of listed items not only includes these items, but also includes other items that are not listed, or includes items inherent in the process, method, apparatus, or device. Without further limitations, an item modified by a term "comprising a ......" does not exclude inclusion of another same item in the process, method, apparatus, or device that includes the item.

The above described embodiments are relatively better embodiments of the present disclosure, and are not intended to limit the present disclosure. All modifications, equivalents, and improvements based on the spirit and principle of the present disclosure should fall within the scope of protection of the present disclosure.
Various embodiments have been described. The present invention may also (alternatively) be described by the below numbered aspects 1 to 174.

### ASPECTS

1. A locking mechanism configured to detachably lock a propeller to a motor, the propeller comprising one of a first body and a second body, the motor comprising the other one of the first body and the second body, characterized in that, the locking mechanism comprises:
   a coupling member;
   a fastener configured to fix the coupling member to the second body; and
   a locking member configured to lock the first body to the coupling member and the second body,
   wherein a bottom portion of the first body that contacts the coupling member is configured to block a free end of the fastener.
2. The locking mechanism of aspect 1, characterized in that, the first body comprises a blocking member located at the bottom portion of the first body that contacts the coupling member and protruding from the bottom portion, the blocking member configured to block the free end of the fastener.
3. The locking mechanism of aspect 2, characterized in that, the fastener is a threaded fastener, the coupling member comprises a threaded hole configured to fit with the fastener, and the blocking member is located at an opening portion of the threaded hole.
4. The locking mechanism of aspect 1, characterized in that, the coupling member comprises a femoral position groove, the bottom portion of the first body that contacts the coupling member comprises a protruding rib configured to fit with the femoral position groove to restrain the first body from rotating relative to the coupling member.
5. The locking mechanism of aspect 4, characterized in that,
   the fastener is a threaded fastener,
   the coupling member comprises a threaded hole configured to fit with the fastener,
   the femoral position groove is disposed adjacent the threaded hole, and
   the protruding rib is integrally disposed with the blocking member.
6. The locking mechanism of aspect 1, characterized in that,
   the locking member comprises locking parts located at at least two sides of the locking member,
   the locking parts comprise a first lock catch end configured to lock the first body, and a second lock catch end configured to lock the second body.
7. The locking mechanism of aspect 6, characterized in that, the first lock catch end comprises a first groove, and the first body comprises a first raised portion configured to fixedly fit with the first groove.
8. The locking mechanism of aspect 7, characterized in that, the second lock catch end comprises a second groove, and the second body comprises a second raised portion configured to slidably fit with the second groove, such that the locking member is rotatable with respect to the second body.
9. The locking mechanism of aspect 8, characterized in that,
   the locking member comprises a third lock catch end configured to lock the first body and the coupling member,
   the third lock catch end is disposed between the first lock catch end and the second lock catch end, and
   the third lock catch end comprises a protrusion configured to abut with the coupling member.
10. The locking mechanism of aspect 6, characterized in that,
   the locking mechanism comprises position limiting lock catch,
   when the locking parts of the locking member rotate to locking positions, the position limiting lock catch is mounted to a side of the locking parts, to restrain the locking member from rotating relative to the first body.
11. The locking mechanism of aspect 10, characterized in that, the locking member is provided with a position limiting block, the position limiting lock catch is provided with a position limiting groove configured to snap fit with the position limiting block.
12. The locking mechanism of aspect 11, characterized in that, a location of the position limiting block on the locking member does not coincide with locations of the locking parts.
13. The locking mechanism of aspect 12, characterized in that, the position limiting lock catch comprises a connecting arm and an operating member, the position limiting groove is disposed at a lower end of the connecting arm, and the operating member is disposed at an upper end of the connecting arm.
14. The locking mechanism of aspect 13, characterized in that, the position limiting lock catch comprises an open portion configured to fit with the first body.
15. The locking mechanism of aspect 10, characterized in that,
   the position limiting lock catch comprises a position limiting boss, and
   when the locking parts of the locking member rotate to the locking positions, the position limiting bass blocks the locking parts from a side of the locking parts, to restrain the locking member from rotating relative to the first body.
16. A propeller, comprising:
   a propeller hub; and
   a blade mounted to the propeller hub, characterized in that the propeller further comprises:
      a locking mechanism configured to detachably lock the propeller hub with a motor,
      wherein the locking mechanism comprises a coupling member, a fastener configured to mount the coupling member to the motor, and a locking member configured to lock the propeller hub to the coupling member and the motor,
      wherein a bottom portion of the propeller hub that contacts the coupling member is configured to block a free end of the fastener.
17. The propeller of aspect 16, characterized in that, the propeller hub comprises a blocking member located at the bottom portion of the first body that contacts the coupling member and protruding from the bottom portion, the blocking member being configured to block a free end of the fastener.
18. The propeller of aspect 17, characterized in that, the fastener is a threaded fastener, the coupling member comprises a threaded hole configured to fit with the fastener, and the blocking member is located at an opening portion of the threaded hole.
19. The propeller of aspect 16, characterized in that, the coupling member comprises a femoral position groove, the bottom portion of the propeller hub that contacts the coupling member comprises a protruding rib configured to fit with the femoral position groove to restrain the propeller hub from rotating relative to the coupling member.
20. The propeller of aspect 19, characterized in that,
   the fastener is a threaded fastener,
   the coupling member comprises a threaded hole configured to fit with the fastener,
   the femoral position groove is disposed adjacent the threaded hole, and
   the protruding rib is integrally disposed with the blocking member.
21. The propeller of aspect 16, characterized in that,
   the locking member comprises locking parts located at at least two sides of the locking member, and
   the locking parts comprise a first lock catch end configured to lock the propeller hub, and a second lock catch end configured to lock the motor.
22. The propeller of aspect 21, characterized in that, the first lock catch end comprises a first groove, and the propeller hub comprises a first raised portion configured to fixedly fit with the first groove.
23. The propeller of aspect 22, characterized in that, the second lock catch end comprises a second groove, and the motor comprises a second raised portion configured to slidably fit with the second groove, such that the locking member is rotatable with respect to the motor.
24. The propeller of aspect 23, characterized in that,
   the locking member comprises a third lock catch end configured to lock the propeller hub and the coupling member,
   the third lock catch end is disposed between the first lock catch end and the second lock catch end, and
   the third lock catch end comprises a protrusion configured to abut with the coupling member.
25. The propeller of aspect 21, characterized in that,
   the locking mechanism comprises position limiting lock catch, and
   when the locking parts of the locking member rotate to locking positions, the position limiting lock catch is mounted to a side of the locking parts, to restrain the locking member from rotating relative to the propeller hub.
26. The propeller of aspect 25, characterized in that, the locking member is provided with a position limiting block, the position limiting lock catch is provided with a position limiting groove configured to snap fit with the position limiting block.
27. The propeller of aspect 26, characterized in that, a location of the position limiting block on the locking member does not coincide with locations of the locking parts.
28. The propeller of aspect 27, characterized in that, the position limiting lock catch comprises a connecting arm and an operating member, the position limiting groove is disposed at a lower end of the connecting arm, and the operating member is disposed at an upper end of the connecting arm.
29. The propeller of aspect 28, characterized in that, the position limiting lock catch comprises an open portion configured to fit with the propeller hub.
30. The propeller of aspect 25, characterized in that,
   the position limiting lock catch comprises a position limiting boss, and
   when the locking parts of the locking member rotate to the locking positions, the position limiting bass blocks the locking parts from a side of the locking parts, to restrain the locking member from rotating relative to the propeller hub.
31. A propeller, comprising:
   a propeller hub; and
   a blade mounted to the propeller hub, characterized in that the propeller further comprises:
      a locking mechanism configured to detachably lock the propeller hub with a motor,
      wherein the locking mechanism comprises a coupling member, a fastener configured to mount the coupling member to the propeller hub, and a locking member configured to lock the motor to the coupling member and the propeller hub, and
      wherein a bottom portion of the motor that contacts the coupling member is configured to block a free end of the fastener.
32. The propeller of aspect 31, characterized in that, the motor comprises a blocking member located at the bottom portion of the first body that contacts the coupling member and protruding from the bottom portion, the blocking member being configured to block a free end of the fastener.
33. The propeller of aspect 32, characterized in that, the fastener is a threaded fastener, the coupling member comprises a threaded hole configured to fit with the fastener, and the blocking member is located at an opening portion of the threaded hole.
34. The propeller of aspect 31, characterized in that, the coupling member comprises a femoral position groove, the bottom portion of the motor that contacts the coupling member comprises a protruding rib configured to fit with the femoral position groove to restrain the motor from rotating relative to the coupling member.
35. The propeller of aspect 34, characterized in that,
   the fastener is a threaded fastener,
   the coupling member comprises a threaded hole configured to fit with the fastener,
   the femoral position groove is disposed adjacent the threaded hole, and
   the protruding rib is integrally disposed with the blocking member.
36. The propeller of aspect 31, characterized in that,
   the locking member comprises locking parts located at at least two sides of the locking member, and
   the locking parts comprise a first lock catch end configured to lock the propeller hub, and a second lock catch end configured to lock the motor.
37. The propeller of aspect 36, characterized in that, the first lock catch end comprises a first groove, and the motor comprises a first raised portion configured to fixedly fit with the first groove.
38. The propeller of aspect 37, characterized in that, the second lock catch end comprises a second groove, and the propeller hub comprises a second raised portion configured to slidably fit with the second groove, such that the locking member is rotatable with respect to the propeller hub.
39. The propeller of aspect 38, characterized in that,
   the locking member comprises a third lock catch end configured to lock the motor and the coupling member,
   the third lock catch end is disposed between the first lock catch end and the second lock catch end, and
   the third lock catch end comprises a protrusion configured to abut with the coupling member.
40. The propeller of aspect 36, characterized in that,
   the locking mechanism comprises position limiting lock catch, and
   when the locking parts of the locking member rotate to locking positions, the position limiting lock catch is mounted to a side of the locking parts, to restrain the locking member from rotating relative to the motor.
41. The propeller of aspect 40, characterized in that, the locking member is provided with a position limiting block, the position limiting lock catch is provided with a position limiting groove configured to snap fit with the position limiting block.
42. The propeller of aspect 41, characterized in that, a location of the position limiting block on the locking member does not coincide with locations of the locking parts.
43. The propeller of aspect 42, characterized in that, the position limiting lock catch comprises a connecting arm and an operating member, the position limiting groove is disposed at a lower end of the connecting arm, and the operating member is disposed at an upper end of the connecting arm.
44. The propeller of aspect 43, characterized in that, the position limiting lock catch comprises an open portion configured to fit with the motor.
45. The propeller of aspect 40, wherein
   the position limiting lock catch comprises a position limiting boss, and
   when the locking parts of the locking member rotate to the locking positions, the position limiting bass blocks the locking parts from a side of the locking parts, to restrain the locking member from rotating relative to the motor.
46. A motor, comprising:
   an outer rotor, characterized in that the motor further comprises:
   a locking mechanism configured to detachably lock a propeller to the outer rotor,
   wherein the locking mechanism comprises:
      a coupling member;
      a fastener configured to fix the coupling member to the propeller; and
      a locking member configured to lock the outer rotor to the coupling member and the propeller,
   wherein a bottom portion of the outer rotor that contacts the coupling member is configured to block a free end of the fastener.
47. The motor of aspect 46, characterized in that, the outer rotor comprises a blocking member located at the bottom portion of the first body that contacts the coupling member and protruding from the bottom portion, the blocking member configured to block the free end of the fastener.
48. The motor of aspect 47, characterized in that, the fastener is a threaded fastener, the coupling member comprises a threaded hole configured to fit with the fastener, and the blocking member is located at an opening portion of the threaded hole.
49. The motor of aspect 46, characterized in that, the coupling member comprises a femoral position groove, the bottom portion of the outer rotor that contacts the coupling member comprises a protruding rib configured to fit with the femoral position groove to restrain the outer rotor from rotating relative to the coupling member.
50. The motor of aspect 49, characterized in that,
   the fastener is a threaded fastener,
   the coupling member comprises a threaded hole configured to fit with the fastener,
   the femoral position groove is disposed adjacent the threaded hole, and
   the protruding rib is integrally disposed with the blocking member.
51. The motor of aspect 46, characterized in that,
   the locking member comprises locking parts located at at least two sides of the locking member, and
   the locking parts comprise a first lock catch end configured to lock the outer rotor, and a second lock catch end configured to lock the propeller.
52. The motor of aspect 51, characterized in that, the first lock catch end comprises a first groove, and the outer rotor comprises a first raised portion configured to fixedly fit with the first groove.
53. The motor of aspect 52, characterized in that, the second lock catch end comprises a second groove, and the propeller comprises a second raised portion configured to slidably fit with the second groove, such that the locking member is rotatable with respect to the propeller.
54. The motor of aspect 53, characterized in that,
   the locking member comprises a third lock catch end configured to lock the outer rotor and the coupling member,
   the third lock catch end is disposed between the first lock catch end and the second lock catch end, and
   the third lock catch end comprises a protrusion configured to abut with the coupling member.
55. The motor of aspect 51, characterized in that,
   the locking mechanism comprises position limiting lock catch, and
   when the locking parts of the locking member rotate to locking positions, the position limiting lock catch is mounted to a side of the locking parts, to restrain the locking member from rotating relative to the outer rotor.
56. The motor of aspect 55, characterized in that, the locking member is provided with a position limiting block, the position limiting lock catch is provided with a position limiting groove configured to snap fit with the position limiting block.
57. The motor of aspect 56, characterized in that, a location of the position limiting block on the locking member does not coincide with locations of the locking parts.
58. The motor of aspect 57, characterized in that, the position limiting lock catch comprises a connecting arm and an operating member, the position limiting groove is disposed at a lower end of the connecting arm, and the operating member is disposed at an upper end of the connecting arm.
59. The motor of aspect 58, characterized in that, the position limiting lock catch comprises an open portion configured to fit with the outer rotor.
60. The motor of aspect 55, characterized in that,
   the position limiting lock catch comprises a position limiting boss, and
   when the locking parts of the locking member rotate to the locking positions, the position limiting bass blocks the locking parts from a side of the locking parts, to restrain the locking member from rotating relative to the outer rotor.
61. A motor, comprising:
   an outer rotor, characterized in that the motor further comprises:
   a locking mechanism configured to detachably lock a propeller to the outer rotor,
   wherein the locking mechanism comprises:
      a coupling member;
      a fastener configured to fix the coupling member to the outer rotor; and
      a locking member configured to lock the propeller to the coupling member and the outer rotor,
   wherein a bottom portion of the propeller that contacts the coupling member is configured to block a free end of the fastener.
62. The motor of aspect 61, characterized in that, the propeller comprises a blocking member located at the bottom portion of the first body that contacts the coupling member and protruding from the bottom portion, the blocking member configured to block the free end of the fastener.
63. The motor of aspect 62, characterized in that, the fastener is a threaded fastener, the coupling member comprises a threaded hole configured to fit with the fastener, and the blocking member is located at an opening portion of the threaded hole.
64. The motor of aspect 61, wherein the coupling member comprises a femoral position groove, the bottom portion of the propeller that contacts the coupling member comprises a protruding rib configured to fit with the femoral position groove to restrain the propeller from rotating relative to the coupling member.
65. The motor of aspect 64, characterized in that,
   the fastener is a threaded fastener,
   the coupling member comprises a threaded hole configured to fit with the fastener,
   the femoral position groove is disposed adjacent the threaded hole, and
   the protruding rib is integrally disposed with the blocking member.
66. The motor of aspect 61, characterized in that,
   the locking member comprises locking parts located at at least two sides of the locking member, and
   the locking parts comprise a first lock catch end configured to lock the propeller, and a second lock catch end configured to lock the outer rotor.
67. The motor of aspect 66, characterized in that, the first lock catch end comprises a first groove, and the propeller comprises a first raised portion configured to fixedly fit with the first groove.
68. The motor of aspect 67, characterized in that, the second lock catch end comprises a second groove, and the outer rotor comprises a second raised portion configured to slidably fit with the second groove, such that the locking member is rotatable with respect to the outer rotor.
69. The motor of aspect 68, characterized in that,
   the locking member comprises a third lock catch end configured to lock the propeller and the coupling member,
   the third lock catch end is disposed between the first lock catch end and the second lock catch end, and
   the third lock catch end comprises a protrusion configured to abut with the coupling member.
70. The motor of aspect 66, characterized in that,
   the locking mechanism comprises position limiting lock catch, and
   when the locking parts of the locking member rotate to locking positions, the position limiting lock catch is mounted to a side of the locking parts, to restrain the locking member from rotating relative to the propeller.
71. The motor of aspect 70, characterized in that, the locking member is provided with a position limiting block, the position limiting lock catch is provided with a position limiting groove configured to snap fit with the position limiting block.
72. The motor of aspect 71, characterized in that, a location of the position limiting block on the locking member does not coincide with locations of the locking parts.
73. The motor of aspect 72, characterized in that, the position limiting lock catch comprises a connecting arm and an operating member, the position limiting groove is disposed at a lower end of the connecting arm, and the operating member is disposed at an upper end of the connecting arm.
74. The motor of aspect 73, characterized in that, the position limiting lock catch comprises an open portion configured to fit with the propeller.
75. The motor of aspect 70, characterized in that,
   the position limiting lock catch comprises a position limiting boss, and
   when the locking parts of the locking member rotate to the locking positions, the position limiting bass blocks the locking parts from a side of the locking parts, to restrain the locking member from rotating relative to the propeller.
76. A propulsion system assembly, comprising:
   a propeller;
   a motor configured to drive the propeller to rotate,
   wherein the propeller comprises one of a first body and a second body,
   wherein the motor comprises the other one of the first body and the second body,
   characterized in that the propulsion system assembly further comprises:
      a locking mechanism configured to lock the first body and the second body, the locking mechanism comprising:
         a coupling member;
         a fastener configured to fix the coupling member to the second body; and
         a locking member configured to lock the first body to the coupling member and the second body,
      wherein a bottom portion of the first body that contacts the coupling member is configured to block a free end of the fastener.
77. The propulsion system assembly of aspect 76, characterized in that, the first body comprises a blocking member located at the bottom portion of the first body that contacts the coupling member and protruding from the bottom portion, the blocking member configured to block the free end of the fastener.
78. The propulsion system assembly of aspect 77, characterized in that, the fastener is a threaded fastener, the coupling member comprises a threaded hole configured to fit with the fastener, and the blocking member is located at an opening portion of the threaded hole.
79. The propulsion system assembly of aspect 76, characterized in that, the coupling member comprises a femoral position groove, the bottom portion of the first body that contacts the coupling member comprises a protruding rib configured to fit with the femoral position groove to restrain the first body from rotating relative to the coupling member.
80. The propulsion system assembly of aspect 79, characterized in that,
   the fastener is a threaded fastener,
   the coupling member comprises a threaded hole configured to fit with the fastener,
   the femoral position groove is disposed adjacent the threaded hole, and
   the protruding rib is integrally disposed with the blocking member.
81. The propulsion system assembly of aspect 76, characterized in that,
   the locking member comprises locking parts located at at least two sides of the locking member, and
   the locking parts comprise a first lock catch end configured to lock the first body, and a second lock catch end configured to lock the second body.
82. The propulsion system assembly of aspect 81, characterized in that, the first lock catch end comprises a first groove, and the first body comprises a first raised portion configured to fixedly fit with the first groove.
83. The propulsion system assembly of aspect 82, characterized in that, the second lock catch end comprises a second groove, and the second body comprises a second raised portion configured to slidably fit with the second groove, such that the locking member is rotatable with respect to the second body.
84. The propulsion system assembly of aspect 83, characterized in that,
   the locking member comprises a third lock catch end configured to lock the first body and the coupling member,
   the third lock catch end is disposed between the first lock catch end and the second lock catch end, and
   the third lock catch end comprises a protrusion configured to abut with the coupling member.
85. The propulsion system assembly of aspect 81, characterized in that,
   the locking mechanism comprises position limiting lock catch, and
   when the locking parts of the locking member rotate to locking positions, the position limiting lock catch is mounted to a side of the locking parts, to restrain the locking member from rotating relative to the first body.
86. The propulsion system assembly of aspect 85, characterized in that, the locking member is provided with a position limiting block, the position limiting lock catch is provided with a position limiting groove configured to snap fit with the position limiting block.
87. The propulsion system assembly of aspect 86, characterized in that, a location of the position limiting block on the locking member does not coincide with locations of the locking parts.
88. The propulsion system assembly of aspect 87, characterized in that, the position limiting lock catch comprises a connecting arm and an operating member, the position limiting groove is disposed at a lower end of the connecting arm, and the operating member is disposed at an upper end of the connecting arm.
89. The propulsion system assembly of aspect 88, characterized in that, the position limiting lock catch comprises an open portion configured to fit with the first body.
90. The propulsion system assembly of aspect 85, characterized in that,
   the position limiting lock catch comprises a position limiting boss, and
   when the locking parts of the locking member rotate to the locking positions, the position limiting bass blocks the locking parts from a side of the locking parts, to restrain the locking member from rotating relative to the first body.
91. The propulsion system assembly of aspect 76, characterized in that, the motor comprises an outer rotor, the second body is the outer rotor of the motor or an adapter provided on the outer rotor of the motor.
92. The propulsion system assembly of aspect 91, characterized in that, the propeller comprises:
   a propeller hub; and
   a blade mounted to the propeller hub, and
   wherein the first body is the outer rotor of the motor or the adapter provided on the outer rotor of the motor.
93. The propulsion system assembly of aspect 76, characterized in that, the motor comprises an outer rotor, and the first body is the outer rotor of the motor or an adapter provided on the outer rotor of the motor.
94. The propulsion system assembly of aspect 93, characterized in that, the propeller comprises:
   a propeller hub; and
   a blade mounted to the propeller hub, and
   wherein the second body is the propeller hub of the propeller.
95. The propulsion system assembly of aspect 76, characterized in that, a driving shaft of the motor is configured to protrude from the coupling member, and the propeller hub comprises a driving groove configured to fit with the driving shaft.
96. An aircraft, comprising:
   an aircraft body;
   characterized in that the aircraft further comprises a propulsion system assembly, the propulsion system assembly comprising:
      a propeller;
      a motor configured to drive the propeller to rotate; and
      a locking mechanism configured to detachably lock the propeller to the motor,
      wherein the propeller comprises one of a first body and a second body, and the motor comprises the other one of the first body and the second body,
      wherein the locking mechanism is configured to lock the first body and the second body, the locking mechanism comprising:
         a coupling member;
         a fastener configured to fix the coupling member to the second body; and
         a locking member configured to lock the first body to the coupling member and the second body,
      wherein a bottom portion of the first body that contacts the coupling member is configured to block a free end of the fastener.
97. The aircraft of aspect 96, characterized in that, the first body comprises a blocking member located at the bottom portion of the first body that contacts the coupling member and protruding from the bottom portion, the blocking member configured to block the free end of the fastener.
98. The aircraft of aspect 97, characterized in that, the fastener is a threaded fastener, the coupling member comprises a threaded hole configured to fit with the fastener, and the blocking member is located at an opening portion of the threaded hole.
99. The aircraft of aspect 96, characterized in that, the coupling member comprises a femoral position groove, the bottom portion of the first body that contacts the coupling member comprises a protruding rib configured to fit with the femoral position groove to restrain the first body from rotating relative to the coupling member.
100. The aircraft of aspect 99, characterized in that,
   the fastener is a threaded fastener,
   the coupling member comprises a threaded hole configured to fit with the fastener,
   the femoral position groove is disposed adjacent the threaded hole, and
   the protruding rib is integrally disposed with the blocking member.
101. The aircraft of aspect 96, characterized in that,
   the locking member comprises locking parts located at at least two sides of the locking member, and
   the locking parts comprise a first lock catch end configured to lock the first body, and a second lock catch end configured to lock the second body.
102. The aircraft of aspect 101, characterized in that, the first lock catch end comprises a first groove, and the first body comprises a first raised portion configured to fixedly fit with the first groove.
103. The aircraft of aspect 102, characterized in that, the second lock catch end comprises a second groove, and the second body comprises a second raised portion configured to slidably fit with the second groove, such that the locking member is rotatable with respect to the second body.
104. The aircraft of aspect 103, characterized in that,
   the locking member comprises a third lock catch end configured to lock the first body and the coupling member,
   the third lock catch end is disposed between the first lock catch end and the second lock catch end, and
   the third lock catch end comprises a protrusion configured to abut with the coupling member.
105. The aircraft of aspect 101, characterized in that,
   the locking mechanism comprises position limiting lock catch, and
   when the locking parts of the locking member rotate to locking positions, the position limiting lock catch is mounted to a side of the locking parts, to restrain the locking member from rotating relative to the first body.
106. The aircraft of aspect 105, characterized in that, the locking member is provided with a position limiting block, the position limiting lock catch is provided with a position limiting groove configured to snap fit with the position limiting block.
107. The aircraft of aspect 106, characterized in that, a location of the position limiting block on the locking member does not coincide with locations of the locking parts.
108. The aircraft of aspect 107, characterized in that, the position limiting lock catch comprises a connecting arm and an operating member, the position limiting groove is disposed at a lower end of the connecting arm, and the operating member is disposed at an upper end of the connecting arm.
109. The aircraft of aspect 108, characterized in that, the position limiting lock catch comprises an open portion configured to fit with the first body.
110. The aircraft of aspect 105, characterized in that,
   the position limiting lock catch comprises a position limiting boss, and
   when the locking parts of the locking member rotate to the locking positions, the position limiting bass blocks the locking parts from a side of the locking parts, to restrain the locking member from rotating relative to the first body.
111. The aircraft of aspect 96, characterized in that, the motor comprises an outer rotor, the second body is the outer rotor of the motor or an adapter provided on the outer rotor of the motor.
112. The aircraft of aspect 111, characterized in that, the propeller comprises:
   a propeller hub; and
   a blade mounted to the propeller hub, and
   wherein the first body is the outer rotor of the motor or the adapter provided on the outer rotor of the motor.
113. The aircraft of aspect 96, characterized in that, the motor comprises an outer rotor, and the first body is the outer rotor of the motor or an adapter provided on the outer rotor of the motor.
114. The aircraft of aspect 113, characterized in that, the propeller comprises:
   a propeller hub; and
   a blade mounted to the propeller hub, and
   wherein the second body is the propeller hub of the propeller.
115. The aircraft of aspect 96, characterized in that, a driving shaft of the motor is configured to protrude from the coupling member, and the propeller hub comprises a driving groove configured to fit with the driving shaft.
116. A locking mechanism configured to detachably lock a propeller to a motor, the propeller comprising one of a first body and a second body, the motor comprising the other one of the first body and the second body, characterized in that the locking mechanism comprises:
   a locking member; and
   a position limiting lock catch,
   wherein the locking member is configured to lock the first body and the second body,
   wherein the locking member comprises locking parts located at at least two sides of the locking member, and
   wherein when the locking parts of the locking member rotate to locking positions, the position limiting lock catch is mounted to a side of the locking parts, to restrain the locking member from rotating relative to the first body.
117. The locking mechanism of aspect 116, characterized in that, the position limiting lock catch is configured to be detachably mounted to the side of the locking parts, and is detachable manually.
118. The locking mechanism of aspect 117, characterized in that, the locking member is provided with a position limiting block, the position limiting lock catch is provided with a position limiting groove configured to snap fit with the position limiting block.
119. The locking mechanism of aspect 118, characterized in that, a location of the position limiting block on the locking member does not coincide with locations of the locking parts.
120. The locking mechanism of aspect 117, characterized in that, the locking parts comprise a first lock catch end configured to lock the first body, and a second lock catch end configured to lock the second body.
121. The locking mechanism of aspect 120, characterized in that, the first lock catch end comprises a first groove, and the first body comprises a first raised portion configured to fixedly fit with the first groove.
122. The locking mechanism of aspect 121, characterized in that, the second lock catch end comprises a second groove, and the second body comprises a second raised portion configured to slidably fit with the second groove, such that the locking member is rotatable with respect to the second body.
123. A propeller, comprising:
   a propeller hub; and
   a blade mounted to the propeller hub; and
   characterized in that the propeller further comprises a locking mechanism configured to detachably lock the propeller hub with a motor,
   wherein the locking mechanism comprises:
      a locking member; and
      a position limiting lock catch,
      wherein the locking member is configured to lock the propeller hub to the motor,
      wherein the locking member comprises locking parts located at at least two sides of the locking member, and
      wherein when the locking parts of the locking member rotate to locking positions, the position limiting lock catch is mounted to a side of the locking parts, to restrain the locking member from rotating relative to the propeller hub.
124. The propeller of aspect 123, characterized in that, the position limiting lock catch is configured to be detachably mounted to the side of the locking parts, and is detachable manually.
125. The propeller of aspect 124, characterized in that, the locking member is provided with a position limiting block, the position limiting lock catch is provided with a position limiting groove configured to snap fit with the position limiting block.
126. The propeller of aspect 125, characterized in that, a location of the position limiting block on the locking member does not coincide with locations of the locking parts.
127. The propeller of aspect 124, characterized in that, the locking parts comprise a first lock catch end configured to lock the propeller hub, and a second lock catch end configured to lock the motor.
128. The propeller of aspect 127, characterized in that, the first lock catch end comprises a first groove, and the propeller hub comprises a first raised portion configured to fixedly fit with the first groove.
129. The propeller of aspect 128, characterized in that, the second lock catch end comprises a second groove, and the motor comprises a second raised portion configured to slidably fit with the second groove, such that the locking member is rotatable with respect to the motor.
130. A propeller, comprising:
   a propeller hub; and
   a blade mounted to the propeller hub;
   characterized in that the propeller further comprises a locking mechanism configured to detachably lock the propeller hub with a motor,
   wherein the locking mechanism comprises:
      a locking member; and
      a position limiting lock catch,
      wherein the locking member is configured to lock the motor to the propeller hub,
      wherein the locking member comprises locking parts located at at least two sides of the locking member, and
      wherein when the locking parts of the locking member rotate to locking positions, the position limiting lock catch is mounted to a side of the locking parts, to restrain the locking member from rotating relative to the motor.
131. The propeller of aspect 130, characterized in that, the position limiting lock catch is configured to be detachably mounted to the side of the locking parts, and is detachable manually.
132. The propeller of aspect 131, characterized in that, the locking member is provided with a position limiting block, the position limiting lock catch is provided with a position limiting groove configured to snap fit with the position limiting block.
133. The propeller of aspect 132, characterized in that, a location of the position limiting block on the locking member does not coincide with locations of the locking parts.
134. The propeller of aspect 131, characterized in that, the locking parts comprise a first lock catch end configured to lock the motor, and a second lock catch end configured to lock the propeller hub.
135. The propeller of aspect 134, characterized in that, the first lock catch end comprises a first groove, and the motor comprises a first raised portion configured to fixedly fit with the first groove.
136. The propeller of aspect 135, characterized in that, the second lock catch end comprises a second groove, and the propeller hub comprises a second raised portion configured to slidably fit with the second groove, such that the locking member is rotatable with respect to the propeller hub.
137. A motor, comprising:
   an outer rotor;
   characterized in that the motor further comprises a locking mechanism configured to detachably connect a propeller with the outer rotor,
   the locking mechanism comprising:
      a locking member; and
      a position limiting lock catch,
      wherein the locking member is configured to lock the outer rotor and the propeller hub,
      wherein the locking member comprises locking parts located at at least two sides of the locking member, and
      wherein when the locking parts of the locking member rotate to locking positions, the position limiting lock catch is mounted to a side of the locking parts, to restrain the locking member from rotating relative to the outer rotor.
138. The motor of aspect 137, characterized in that, the position limiting lock catch is configured to be detachably mounted to the side of the locking parts, and is detachable manually.
139. The motor of aspect 138, characterized in that, the locking member is provided with a position limiting block, the position limiting lock catch is provided with a position limiting groove configured to snap fit with the position limiting block.
140. The motor of aspect 139, characterized in that, a location of the position limiting block on the locking member does not coincide with locations of the locking parts.
141. The motor of aspect 138, characterized in that, the locking parts comprise a first lock catch end configured to lock the outer rotor, and a second lock catch end configured to lock the propeller.
142. The motor of aspect 141, characterized in that, the first lock catch end comprises a first groove, and the outer rotor comprises a first raised portion configured to fixedly fit with the first groove.
143. The motor of aspect 142, characterized in that, the second lock catch end comprises a second groove, and the propeller comprises a second raised portion configured to slidably fit with the second groove, such that the locking member is rotatable with respect to the propeller.
144. A motor, comprising:
   an outer rotor; and
   characterized in that the motor further comprises a locking mechanism configured to detachably lock the propeller with the outer rotor,
   wherein the locking mechanism comprises:
      a locking member; and
      a position limiting lock catch,
      wherein the locking member is configured to lock the propeller and the outer rotor,
      wherein the locking member comprises locking parts located at at least two sides of the locking member, and
      wherein when the locking parts of the locking member rotate to locking positions, the position limiting lock catch is mounted to a side of the locking parts, to restrain the locking member from rotating relative to the propeller.
145. The motor of aspect 144, characterized in that, the position limiting lock catch is configured to be detachably mounted to the side of the locking parts, and is detachable manually.
146. The motor of aspect 145, characterized in that, the locking member is provided with a position limiting block, the position limiting lock catch is provided with a position limiting groove configured to snap fit with the position limiting block.
147. The motor of aspect 146, characterized in that, a location of the position limiting block on the locking member does not coincide with locations of the locking parts.
148. The motor of aspect 145, characterized in that, the locking parts comprise a first lock catch end configured to lock the propeller, and a second lock catch end configured to lock the outer rotor.
149. The motor of aspect 148, characterized in that, the first lock catch end comprises a first groove, and the propeller comprises a first raised portion configured to fixedly fit with the first groove.
150. The motor of aspect 149, characterized in that, the second lock catch end comprises a second groove, and the outer rotor comprises a second raised portion configured to slidably fit with the second groove, such that the locking member is rotatable with respect to the outer rotor.
151. A propulsion system assembly, comprising:
   a propeller;
   a motor configured to drive the propeller to rotate, and
   wherein the propeller comprises one of a first body and a second body,
   wherein the motor comprises the other one of the first body and the second body,
   characterized in that the propulsion system assembly further comprises a locking mechanism configured to detachably connecting the first body and the second body, the locking mechanism comprising:
      a locking member; and
      a position limiting lock catch,
      wherein the locking member is configured to lock the first body and the second body,
      wherein the locking member comprises locking parts located at at least two sides of the locking member, and
      wherein when the locking parts of the locking member rotate to locking positions, the position limiting lock catch is mounted to a side of the locking parts, to restrain the locking member from rotating relative to the first body.
152. The propulsion system assembly of aspect 151, characterized in that, the position limiting lock catch is configured to be detachably mounted to the side of the locking parts, and is detachable manually.
153. The propulsion system assembly of aspect 152, characterized in that, the locking member is provided with a position limiting block, the position limiting lock catch is provided with a position limiting groove configured to snap fit with the position limiting block.
154. The propulsion system assembly of aspect 153, characterized in that, a location of the position limiting block on the locking member does not coincide with locations of the locking parts.
155. The propulsion system assembly of aspect 152, characterized in that, the locking parts comprise a first lock catch end configured to lock the first body, and a second lock catch end configured to lock the second body.
156. The propulsion system assembly of aspect 155, characterized in that, the first lock catch end comprises a first groove, and the first body comprises a first raised portion configured to fixedly fit with the first groove.
157. The propulsion system assembly of aspect 156, characterized in that, the second lock catch end comprises a second groove, and the second body comprises a second raised portion configured to slidably fit with the second groove, such that the locking member is rotatable with respect to the second body.
158. The propulsion system assembly of aspect 151, characterized in that, the motor comprises an outer rotor, the second body is the outer rotor of the motor or an adapter provided on the outer rotor of the motor.
159. The propulsion system assembly of aspect 158, characterized in that, the propeller comprises:
   a propeller hub; and
   a blade mounted to the propeller hub, and
   wherein the first body is the outer rotor of the motor or the adapter provided on the outer rotor of the motor.
160. The propulsion system assembly of aspect 151, characterized in that, the motor comprises an outer rotor, and the first body is the outer rotor of the motor or an adapter provided on the outer rotor of the motor.
161. The propulsion system assembly of aspect 160, characterized in that, the propeller comprises:
   a propeller hub; and
   a blade mounted to the propeller hub, and
   wherein the second body is the propeller hub of the propeller.
162. The propulsion system assembly of aspect 151, characterized in that, the propeller hub comprises a driving groove configured to fit with a driving shaft of the motor.
163. An aircraft, comprising:
   an aircraft body;
   characterized in that the aircraft further comprises a propulsion system assembly comprising:
      a propeller;
      a motor configured to drive the propeller to rotate; and
      a locking mechanism configured to detachably lock the propeller to the motor,
      wherein the propeller comprises one of a first body and a second body, and the motor comprises the other one of the first body and the second body, and
      wherein the locking mechanism is configured to detachably connect the first body and the second body, the locking mechanism comprising:
         a locking member; and
         a position limiting lock catch,
         wherein the locking member is configured to lock the first body and the second body,
         wherein the locking member comprises locking parts located at at least two sides of the locking member, and
         wherein when the locking parts of the locking member rotate to locking positions, the position limiting lock catch is mounted to a side of the locking parts, to restrain the locking member from rotating relative to the first body.
164. The aircraft of aspect 163, characterized in that, the position limiting lock catch is configured to be detachably mounted to the side of the locking parts, and is detachable manually.
165. The aircraft of aspect 164, characterized in that, the locking member is provided with a position limiting block, the position limiting lock catch is provided with a position limiting groove configured to snap fit with the position limiting block.
166. The aircraft of aspect 165, characterized in that, a location of the position limiting block on the locking member does not coincide with locations of the locking parts.
167. The aircraft of aspect 164, characterized in that, the locking parts comprise a first lock catch end configured to lock the first body, and a second lock catch end configured to lock the second body.
168. The aircraft of aspect 167, characterized in that, the first lock catch end comprises a first groove, and the first body comprises a first raised portion configured to fixedly fit with the first groove.
169. The aircraft of aspect 168, characterized in that, the second lock catch end comprises a second groove, and the second body comprises a second raised portion configured to slidably fit with the second groove, such that the locking member is rotatable with respect to the second body.
170. The aircraft of aspect 163, characterized in that, the motor comprises an outer rotor, the second body is the outer rotor of the motor or an adapter provided on the outer rotor of the motor.
171. The aircraft of aspect 170, characterized in that, the propeller comprises:
   a propeller hub; and
   a blade mounted to the propeller hub, and
   wherein the first body is the outer rotor of the motor or the adapter provided on the outer rotor of the motor.
172. The aircraft of aspect 163, characterized in that, the motor comprises an outer rotor, and the first body is the outer rotor of the motor or an adapter provided on the outer rotor of the motor.
173. The aircraft of aspect 172, characterized in that, the propeller comprises:
   a propeller hub; and
   a blade mounted to the propeller hub, and
   wherein the second body is the propeller hub of the propeller.
174. The aircraft of aspect 163, characterized in that, the propulsion system assembly comprises a motor, and wherein the propeller hub comprises a driving groove configured to fit with a driving shaft of the motor.

## Claims

1. A propulsion system assembly, comprising:
a propeller;
a motor configured to drive the propeller to rotate,
wherein the propeller comprises one of a first body and a second body,
wherein the motor comprises the other one of the first body and the second body,
**characterized in that** the propulsion system assembly further comprises:
a locking mechanism configured to lock the first body and the second body, the locking mechanism comprising:
a coupling member;
a fastener configured to fix the coupling member to the second body; and
a locking member configured to lock the first body to the coupling member and the second body,
wherein a bottom portion of the first body that contacts the coupling member is configured to block a free end of the fastener.

2. The propulsion system assembly of claim 1, **characterized in that**, the coupling member comprises a femoral position groove, the bottom portion of the first body that contacts the coupling member comprises a protruding rib configured to fit with the femoral position groove to restrain the first body from rotating relative to the coupling member.

3. The propulsion system assembly of claim 2, **characterized in that**,
the fastener is a threaded fastener,
the coupling member comprises a threaded hole configured to fit with the fastener,
the femoral position groove is disposed adjacent the threaded hole, and
the protruding rib is integrally disposed with the blocking member.

4. The propulsion system assembly of claim 1, **characterized in that**, the first body comprises a blocking member located at the bottom portion of the first body that contacts the coupling member and protruding from the bottom portion, the blocking member configured to block the free end of the fastener, preferably
wherein the fastener is a threaded fastener, the coupling member comprises a threaded hole configured to fit with the fastener, and the blocking member is located at an opening portion of the threaded hole.

5. The propulsion system assembly of claim 1, **characterized in that**,
the locking member comprises locking parts located at at least two sides of the locking member, and
the locking parts comprise a first lock catch end configured to lock the first body, and a second lock catch end configured to lock the second body.

6. The propulsion system assembly of claim 5, **characterized in that**, the first lock catch end comprises a first groove, and the first body comprises a first raised portion configured to fixedly fit with the first groove, preferably
wherein the second lock catch end comprises a second groove, and the second body comprises a second raised portion configured to slidably fit with the second groove, such that the locking member is rotatable with respect to the second body.

7. The propulsion system assembly of claim 5, **characterized in that**,
the locking mechanism comprises position limiting lock catch, and
when the locking parts of the locking member rotate to locking positions, the position limiting lock catch is mounted to a side of the locking parts, to restrain the locking member from rotating relative to the first body.

8. The propulsion system assembly of claim 7, **characterized in that**, the locking member is provided with a position limiting block, the position limiting lock catch is provided with a position limiting groove configured to snap fit with the position limiting block.

9. The propulsion system assembly of claim 5, **characterized in that**,
the position limiting lock catch comprises a position limiting boss, and
when the locking parts of the locking member rotate to the locking positions, the position limiting bass blocks the locking parts from a side of the locking parts, to restrain the locking member from rotating relative to the first body.

10. The propulsion system assembly of claim 1, **characterized in that**, the motor comprises an outer rotor, the second body is the outer rotor of the motor or an adapter provided on the outer rotor of the motor.

11. The propulsion system assembly of claim 10, **characterized in that**, the propeller comprises:
a propeller hub; and
a blade mounted to the propeller hub, and
wherein the first body is the outer rotor of the motor or the adapter provided on the outer rotor of the motor.

12. The propulsion system assembly of claim 1, **characterized in that**, the motor comprises an outer rotor, and the first body is the outer rotor of the motor or an adapter provided on the outer rotor of the motor.

13. The propulsion system assembly of claim 12, **characterized in that**, the propeller comprises:
a propeller hub; and
a blade mounted to the propeller hub, and
wherein the second body is the propeller hub of the propeller.

14. The propulsion system assembly of claim 1, **characterized in that**, a driving shaft of the motor is configured to protrude from the coupling member, and the propeller hub comprises a driving groove configured to fit with the driving shaft.

15. An aircraft, comprising:
an aircraft body;
**characterized in that** the aircraft further comprises the propulsion system assembly of any one of the preceding claims.
